# EUROPEAN PATENT SPECIFICATION

(11) **EP 4 155 602 B1**
(45) Date of publication and mention of the grant of the patent: **23.09.2026**
(21) Application number: 21860096.3
(22) Date of filing: 05.08.2021
(51) Int. Cl.: A61H 33/00, F17D 1/02, F17D 3/01, F17D 5/00

(54) **INFLATION SYSTEM, MASSAGE POOL AIR SUPPLY SYSTEM, AND INFLATION METHOD**
AUFPUMPSYSTEM, MASSAGEPOOLLUFTZUFUHRSYSTEM UND AUFPUMPVERFAHREN
SYSTÈME DE GONFLAGE, SYSTÈME D'ALIMENTATION EN AIR DE PISCINE DE MASSAGE ET PROCÉDÉ DE GONFLAGE

(30) Priority: 25.08.2020 CN 202010863363
(43) Date of publication of application: 29.03.2023
(73) Proprietor: Oriental Recreational Products (Shanghai) Co., Ltd, Fengxian, Shanghai 201402 (CN)
(72) Inventor: WANG, Zhiyue, Shanghai 201402 (CN)
(74) Representative: Zacco Norway AS
(86) International application number: PCT/CN2021/110911
(87) International publication number: WO 2022/042256

(56) References cited:
- WO-A1-2020/038090
- WO-A2-2015/010058
- CN-A- 101 219 024
- CN-A- 107 035 703
- CN-U- 205 779 791
- CN-U- 207 314 924
- CN-U- 209 875 430
- CN-U- 210 035 054
- CN-U- 212 617 639
- DE-A1- 102018 205 328
- US-A1- 2012 114 505

## Description

### TECHNICAL FIELD

The present invention relates to the technical field of massage pools, in particular to an inflation system, a massage pool air supply system, and an inflation method.

### BACKGROUND

In the current metropolitan life, more leisure is needed to increase the enjoyment of life due to the fast life pace and greater work pressure. Compared with the traditional pool, the massage pool (SPA) is widely welcomed by people because of its massage and leisure functions, which enable people to relax and enjoy life more when bathing. The traditional massage pool generally includes two air supply pipelines, one of which is a gas inflation pipeline to inflate the pool body of the pool; the other is a bubble spraying pipeline that sprays bubbles during bathing.

At present, the pool body of the SPA product needs to be connected with another gas supply apparatus (such as a gas pump) to inflate it. This process is troublesome and users need to prepare a set of gas supply apparatus to inflate it. Over inflation may occur during inflation, which may damage the pool body. CN 210 035 054 U discloses an inflation system, wherein the inflation system comprises: a first gas channel having a gas inlet port and a gas outlet port, wherein the gas inlet port is configured for being connected to a gas supply apparatus, and the gas outlet port is configured for communicating with a gas chamber of an inflated object; the first gas channel is configured to be switched between a first state and a second state; a second gas channel is provided on an outer wall of the first gas channel and a gas pressure sensor is provided on the second gas channel; in the first state, a gas pressure in the gas chamber measured by the gas pressure sensor does not reach a set value, and the first gas channel is configured to inflate the gas chamber; and in the second state, the gas pressure in the gas chamber measured by the gas pressure sensor reaches the set value, and the first gas channel is configured to stop inflating the gas chamber.

### SUMMARY

The aim of the present invention is to address the occurrence of over inflation when the pool body is inflated. The present invention provides an inflation system, a massage pool air supply system, and an inflation method that effectively protect the inflated object. The present invention is defined in the independent claims, with optional features being defined in the dependent claims.

To solve the above technical problem, an implementation of the present invention discloses an inflation system, including: a first gas channel having a gas inlet port and a gas outlet port, wherein the gas inlet port is used for being connected to a gas supply apparatus, and the gas outlet port is used for communicating with a gas chamber of an inflated object; the first gas channel is able to be switched between a first state and a second state; and a second gas channel arranged in parallel to the first gas channel, the second gas channel is used for communicating with the gas chamber, and a gas pressure sensor is provided on the second gas channel; in the first state, a gas pressure in the gas chamber measured by the gas pressure sensor does not reach a set value, and the first gas channel is able to inflate the gas chamber; and in the second state, the gas pressure in the gas chamber measured by the gas pressure sensor reaches the set value, and the first gas channel is able to stop inflating the gas chamber.

With the above technical solution, the inflated object can be inflated by the gas supply apparatus and the gas pressure of the gas chamber can be detected by the gas pressure sensor, thus preventing over inflation, and the inflated object can be effectively protected.

According to another specific implementation of the invention, a switching apparatus is provided on the first gas channel, in the first state, the switching apparatus is in an on state; in the second state, the switching apparatus is in an off state.

According to another specific implementation of the invention, the switching apparatus is a solenoid valve.

According to another specific implementation of the invention, in the first state, the gas supply apparatus is in an operation state; in the second state, the gas supply apparatus is in an out-of-operation state.

According to another specific implementation of the invention, an outer wall of the first gas channel is provided with the second gas channel.

According to another specific implementation of the invention, a port of the second gas channel in communication with the gas chamber is on the same side of the first gas channel as the gas outlet port, the first gas channel and the second gas channel are used for communicating with a same inflation interface of the gas chamber.

According to another specific implementation of the invention, the extension direction of the first gas channel is parallel to the extension direction of the second gas channel, the pipe diameter of the second gas channel is smaller than the pipe diameter of the first gas channel, and an end of the first gas channel in the extension direction which is not in communication with the gas chamber is closed.

According to another specific implementation of the invention, the ratio of the pipe diameter of the second gas channel to the pipe diameter of the first gas channel is 1/20 to 1/2.

According to another specific implementation of the invention, an outer wall of the second gas channel is provided with an extension channel in communication with the second gas channel, and the gas pressure sensor is arranged on the extension channel.

According to another specific implementation of the invention, the first gas channel and the second gas channel are respectively used for communicating with inflation interfaces at different positions of the gas chamber.

According to another specific implementation of the invention, the first gas channel is also provided with a one-way valve inside, and in the first state, the one-way valve is in an on state; in the second state, the one-way valve is in an off state.

According to another specific implementation of the invention, the system further includes a third gas channel, which is provided with an gas inlet port and a gas outlet port, the gas inlet port of the third gas channel is connected with the gas supply apparatus, and the gas outlet port of the third gas channel is used for being connected with a bubble spraying interface of the inflated object.

According to another specific implementation of the invention, the first gas channel and the third gas channel are connected with the gas supply apparatus through a three-way structural member.

The present application also provides a massage pool air supply system, including: a gas supply apparatus; a pool body, which is provided with an gas chamber; and the above-mentioned inflation system, wherein the gas inlet port of the first gas channel is connected with the gas supply apparatus, and the air outlet port of the first gas channel and the second gas channel communicate with the gas chamber, respectively.

The present application also provides an inflation method used for the above-mentioned massage pool air supply system and includes: detecting that the gas pressure in the gas chamber does not reach a set value, and controlling the first gas channel to be in a first state of inflating the gas chamber; and detecting that the gas pressure in the gas chamber reaches the set value, and controlling the first gas channel to be in a second state of stopping inflation to the gas chamber.

### BRIEF DESCRIPTION OF THE DRAWINGS

FIG 1 illustrates a block diagram of an inflation system in accordance with an embodiment of the present invention;
FIG 2 illustrates a schematic view of the air flow of the inflation system in accordance with an embodiment of the present invention;
FIG 3 illustrates a perspective view of the inflation system in accordance with an embodiment of the present invention;
FIG 4 illustrates a cross-sectional view of the inflation system in accordance with an embodiment of the present invention;
FIG 5 illustrates a perspective view of an gas pressure sensor in the inflation system in accordance with an embodiment of the present invention;
FIG 6 illustrates a perspective view of a switching apparatus in the inflation system in accordance with an embodiment of the present invention;
FIG 7 illustrates a cross-sectional view of the switching apparatus in the inflation system in accordance with an embodiment of the present invention;
FIG 8 illustrates a cross-sectional view of a three-way structural member in the inflation system in accordance with an embodiment of the present invention;
FIG 9 illustrates a perspective view of a gas supply apparatus in the inflation system in accordance with an embodiment of the present invention; and
FIG 10 illustrates a cross-sectional view of the gas supply apparatus in the inflation system in accordance with an embodiment of the present invention.

### DETAILED DESCRIPTION

Implementations of the present invention are described below with particular specific embodiments and other advantages and effects of the invention will be readily apparent to those skilled in the art from the disclosure of this specification. Although the description of the present invention will be introduced in conjunction with preferred embodiments, it is not intended that the features of the invention are limited to the embodiments. On the contrary, the purpose of introducing the invention in combination with the embodiments is to cover other options or modifications that may be extended based on the claims of the present invention. In order to provide a deep understanding of the present invention, many specific details will be included in the following description. The invention may also be practiced without these details. Further some specific details will be omitted in the description in order to avoid confusing or obscuring the emphasis of the present invention. It should be noted that the embodiments in the present invention and the features in the embodiments can be combined with each other without conflict.

It should be noted that, in this specification, like numerals and letters denote like items in the following drawings, and therefore, once a certain item is defined in one drawing, it does not need to be further defined and explained in subsequent drawings.

In the description of the embodiments, it should be noted that an orientation or positional relationship indicated by the terms "inner", "bottom" and the like is based on the orientation or positional relationship shown in the drawings, or the usual orientation or positional relationship of a product of the invention when it is used, is only for the convenience of describing the invention and simplifying the description, and does not indicate or imply that the apparatus or element referred to must have a specific orientation, be constructed and operate in a specific orientation, so it cannot be understood as a limitation to the invention.

The terms "first", "second", etc. are used only to distinguish descriptions and cannot be understood to indicate or imply relative importance.

In the description of the embodiments, it should also be noted that unless otherwise expressly specified and limited, the terms "arrangement" and "connection" should be understood in a broad sense, for example, the connection can be fixed connection, detachable connection, or integrated connection; can be mechanical connection or electrical connection; can be direct connection or indirect connection through an intermediate medium, and can be the internal communication of two elements. For those of ordinary skill in the art, the specific meaning of the above terms in the embodiments can be understood according to the specific situation.

In order to make the objectives, technical solutions and advantages of the present invention clearer, the embodiments of the present invention will be described in further detail below with reference to the accompanying drawings.

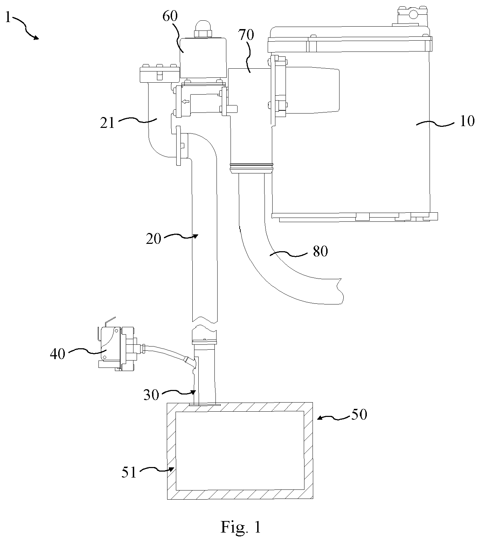

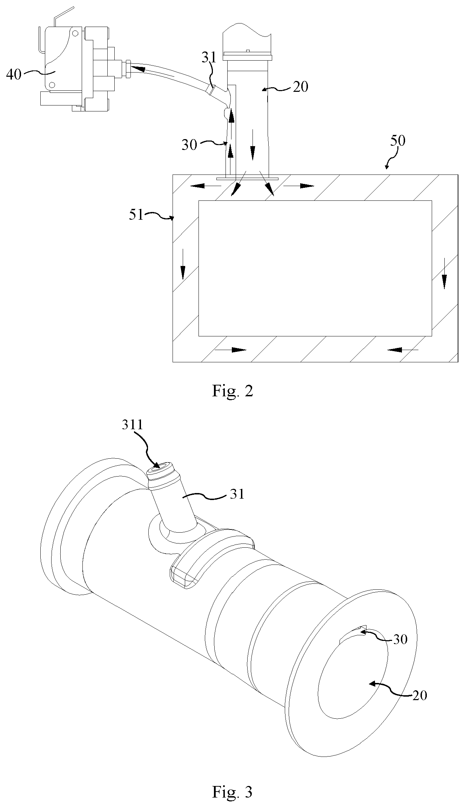

Referring to FIGS. 1 to 5, the present application provides an inflation system 1, including: a gas supply apparatus 10 (for example a gas source such as a gas pump) for supplying gas, a first gas channel 20 and a second gas channel 30; the first gas channel 20 has a gas inlet port and a gas outlet port; the gas inlet port of the first gas channel 20 is used for being connected to the gas supply apparatus 10, and the gas outlet port of the first gas channel 20 is used for communicating with a gas chamber 51 of an inflated object 50 (for example a pool body); the first gas channel 20 can be switched between a first state and a second state; the second gas channel 30 is arranged in parallel to the first gas channel 20; the second gas channel 30 is used for communicating with the gas chamber 51; a gas pressure sensor 40 is provided on the second gas channel 30. As shown in FIG 2, after the first gas channel 20 supplies gas into the gas chamber 51, a portion of the air in the gas chamber 51 also flows into the second gas channel 30 while the gas chamber 51 is inflated (black arrows show the air flow in FIG 2).

Here, "parallel arrangement" may be understood as follows: the first gas channel 20 and the second gas channel 30 are structurally not in communication with each other except for being able to jointly communicate with the gas chamber 51 of the inflated object 50. That is, the first gas channel 20 and the second gas channel 30 are not connected in series with each other.

In the present embodiment, with reference to FIG 2, since the second gas channel 30 is used for communicating with the gas chamber 51 of the inflated object 50, the gas pressure within the second gas channel 30 and the gas pressure within the gas chamber 51 are equal. Thus, the gas pressure sensor 40 provided on the second gas channel 30 can detect the gas pressure in the gas chamber 51 through the second gas channel 30 with improved sensitivity. The first gas channel 20 then functions to supply gas to the gas chamber 51 and the second gas channel 30 functions to detect the gas pressure of the gas chamber 51. The "gas supply" and "gas pressure detection" functions are respectively realized by two different gas channels, and the two different gas channels do not interfere with each other and do not affect each other. The gas supply efficiency and gas pressure detection efficiency are both improved.

Thus, when the first gas channel 20 is in the first state, the gas pressure in the gas chamber 51 detected by the gas pressure sensor 40 does not reach the set value (i.e. the gas pressure in the second gas channel 30 does not reach the set value), and the first gas channel 20 is able to inflate the gas chamber 51 and the inflated object 50continues to be inflated. When the first gas channel 20 is in the second state, the gas pressure in the gas chamber 51 detected by the gas pressure sensor 40 reaches the set value (i.e. the gas pressure in the second gas channel 30 reaches the set value), it is indicated that the gas chamber 51 of the inflated object 50 has been fully inflated with air, and continuous inflation is not required. As a result, the first gas channel 20 stops inflating the gas chamber 51, which automatically shuts off the gas source to prevent over inflation, and of the inflated object 50 can be effectively protected. The specific set value of the gas pressure inside the gas chamber 51 is not limited, for example, the value is related to the volume of the gas chamber 51 of the inflated object 50.

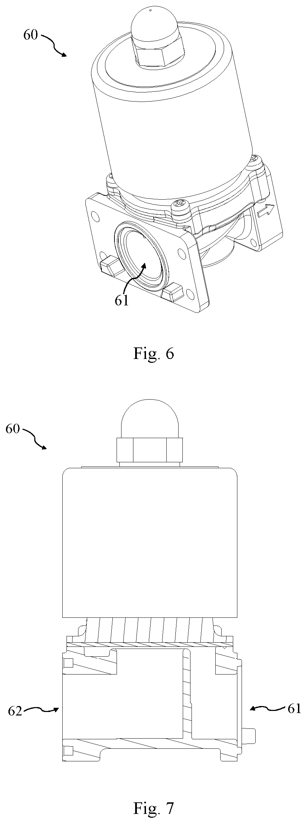

In some possible implementations, with reference to FIGS. 1, 6 and 7, a switching apparatus 60 is provided on the first gas channel 20 and the gas pressure sensor 40 is connected to the switching apparatus 60. Alternatively, the gas pressure sensor 40 is in communication connection with the switching apparatus 60. In the first state, the switching apparatus 60 is in the on state; in the second state, the switching apparatus 60 is in the off state. That is, the on or off state of the switching apparatus 60 is controlled according to the gas pressure detection value of the gas pressure sensor 40. As a result, when the switching apparatus 60 is in the on state, the first gas channel 20 is in the first state and is able to inflate the gas chamber 51; when the switching apparatus 60 is in the off state. the first gas channel 20 is in the second state and stops inflating the gas chamber 51.

In some possible implementations, the gas inlet port of the first gas channel 20 is connected via an elbow 21 to the gas outlet port 62 of the switching apparatus 60, the gas inlet port 61 of the switching apparatus 60 is connected to the gas supply apparatus 10. Alternatively, the elbow 21 is a pipeline structure.

Further, the specific type of the switching apparatus 60 is not limited as long as an on-off function can be implemented. Alternatively, the switching apparatus 60 is a solenoid valve, i.e.the gas source is automatically switched by controlling the action of the solenoid valve, thereby preventing over inflation.

In some possible implementations, the gas pressure sensor 40 is connected to the gas supply apparatus 10. In the first state, the gas supply apparatus 10 is in an operation state; in the second state, the gas supply apparatus 10 is in an out-of-operation state. That is, control of the gas source is achieved by controlling operation or out-of-operation state of the gas supply apparatus 10 in accordance with the gas pressure detection value of the gas pressure sensor 40. In the operation state, the gas supply apparatus 10 supplies gas to the first gas channel 20, and the first gas channel 20 is in the first state such that the first gas channel 20 can inflate the gas chamber 51. In the out-of-operation state, the gas supply apparatus 10 stops supplying gas to the first gas channel 20, the gas source is switched off, and the first gas channel 20 is in the second state, whereby the first gas channel 20 stops inflating the gas chamber 51.

In some possible implementations, with reference to FIGS. 2 to 4, the second gas channel 30 is provided on an outer wall of the first gas channel 20. That is, the first gas channel 20 and the second gas channel 30 are arranged in parallel on a same pipeline Alternatively, the first gas channel 20 and the second gas channel 30 are integrally formed.

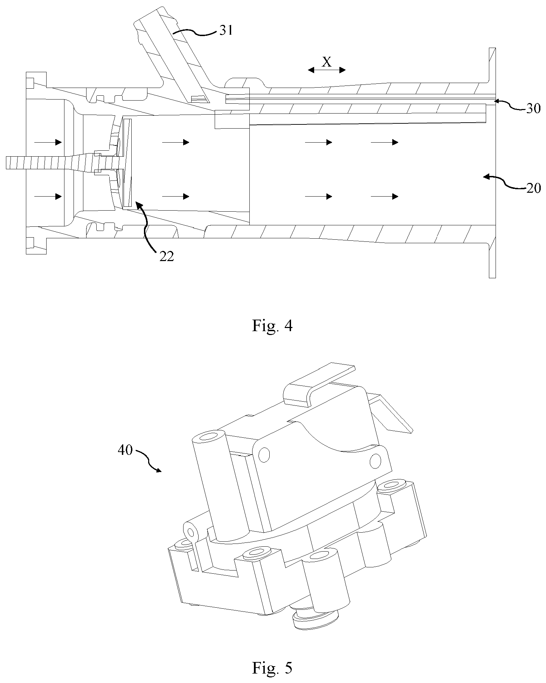

As shown in FIG 4, the port through which the second gas channel 30 communicates with the gas chamber 51 is located on the same side of the first gas channel 20 as the gas outlet port of the first gas channel 20, such arrangement facilitates the communication of the first gas channel 20 and the second gas channel 30 with the same inflation interface of the gas chamber 51. That is, the first gas channel 20 and the second gas channel 30 are used for communicating with the inflation interface of the gas chamber 51 at the same position. The structural design of the pool body as well as the structural design of the inflation system 1 is simplified.

In some possible implementations, as shown in FIG 4, the extension direction (shown in the X direction in FIG 4) of the first gas channel 20 is parallel to the extension direction of the second gas channel 30, the pipe diameter of the second gas channel 30 is smaller than the pipe diameter of the first gas channel 20, and and an end of the first gas channel 20 in the extension direction which is not in communication with the gas chamber 51 is closed. As previously mentioned, the primary function of the first gas channel 20 is to realize "gas supply", the primary function of the second gas channel 30 is to realize "gas pressure detection", the pipe diameter of the first gas channel 20 is larger than the pipe diameter of the second gas channel 30, which facilitates rapid supply of gas to the gas chamber 51 of the inflated object 50 by the first gas channel 20, and at the same time, the second gas channel 30 can sensitively feedback the gas pressure in the gas chamber 51 of the inflated object 50.

Alternatively, the ratio of the pipe diameter of the second gas channel 30 to the pipe diameter of the first gas channel 20 is between 1/20 and 1/2 (1/20 and 1/2 are included), for example 1/10.

With further reference to FIGS. 2 to 4, an outer wall of the second gas channel 30 is provided with an extension channel 31 in communication with the second gas channel 30, and the gas pressure sensor 40 is arranged on the extension channel 31. That is, the extension channel 31, the first gas channel 20 and the second gas channel 30 are integrated on the same pipeline. By designing the extension channel 31, the installation of the gas pressure sensor 40 is achieved, and the structure is simple and convenient for processing and manufacturing.

Alternatively, as shown in FIGS. 2 and 3, the end of the extension channel 31 not connected to the second gas channel 30 has a detection port 311, and the gas pressure sensor 40 is connected to the detection port 311 of the extension channel 31. The gas pressure in the extending channel 31 and the gas pressure in the second gas channel 30 are equal, so that the gas pressure sensor 40, by detecting the gas pressure in the extension channel 31, achieves the detection of the gas pressure in the gas chamber 51 of the inflated object 50.

In some possible implementations, the first gas channel 20 and the second gas channel 30 are respectively used for communicating with inflation interfaces at different positions of the gas chamber 51. Correspondingly, two inflation interfaces are provided at different positions of the gas chamber 51 of the inflated object 50. One inflation interface communicates with the first gas channel 20 to realize inflation into the gas chamber 51, and the other inflation interface communicates with the second gas channel 30 to realize detection of gas pressure within the gas chamber 51.

With reference to FIG 4, in some possible implementations, a one-way valve 22 is also provided within the first gas channel 20, in the first state, the one-way valve 22 is in an on state and air can flow through the first gas channel 20 (the air flow is shown by black arrows in FIG 4) into the gas chamber 51 of the inflated object 50. In the second state, the one-way valve 22 is in the off state and no air flows through the first gas channel 20 into the gas chamber 51 of the inflated object 50, nor does air in the gas chamber 51 of the inflated object 50 flow back through the first gas channel 20 towards the gas supply apparatus 10. The safety of the inflation system 1 is improved.

With further reference to FIG 1, in some possible implementations, the inflation system 1 further includes a third gas channel 80 having a gas inlet port and a gas outlet port, the gas inlet port of the third gas channel 80 is connected to the gas supply apparatus 10 and the gas outlet port of the third gas channel 80 is used for being connected with the bubble spraying interface of the inflated object 50. That is, the air provided by the gas supply apparatus 10 flows to the first gas channel 20 and the third gas channel 80, respectively. The function of inflating the gas chamber 51 of the inflated object 50 and the function of spraying bubbles to the inflated object 50 can be achieved. Both functions of inflation and bubble spraying are achieved simultaneously by one gas supply apparatus 10.

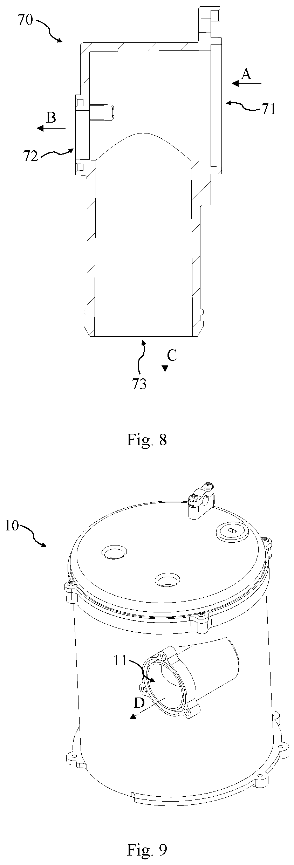

Referring to FIGS. 1 and 8, the first gas channel 20 and the third gas channel 80 are connected to the gas supply apparatus 10 via a three-way structural member 70. The three-way structural member 70 includes a gas inlet 71 and a first gas outlet 72 and a second gas outlet 73, wherein the gas inlet 71 of the three-way structural member 70 is connected to the gas supply apparatus 10, the first gas outlet 72 of the three-way structural member 70 is connected to the gas inlet port 61 of the switching apparatus 60, and the second gas outlet 73 of the three-way structural member 70 is connected to the third gas channel 80. Thus, the gas supply apparatus 10 supplies gas to the gas inlet 71 of the three-way structural member 70 (air flow is shown in direction A in FIG 8), the first gas outlet 72 of the three-way structural member 70 supplies gas to the first gas channel 20 (air flow is shown in direction B in FIG 8), and the second gas outlet 73 of the three-way structural member 70 supplies gas to the third gas channel 80 (air flow is shown in direction C in FIG. 8).

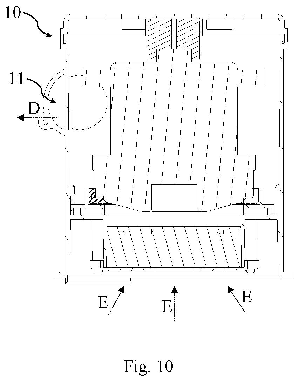

Referring to FIGS. 9 and 10, in some possible implementations, the gas supply apparatus 10 is a gas pump. Alternatively, the gas supply apparatus 10 draws air from the bottom (air flow is shown in direction E in FIG 10), the gas outlet 11 is provided on a side wall of the gas supply apparatus 10 (air flow is shown in direction D in FIG 9 and FIG 10), and the gas outlet 11 of the gas supply apparatus 10 is connected to the gas inlet 71 of the three-way structural member 70 to supply gas to the three-way structural member 70.

With reference to FIG 1, the present application also provides a massage pool air supply system which includes: a gas supply apparatus 10; a pool body (i.e. the inflated object 50) having a gas chamber 51; the inflation system 1 according to any one of the embodiments described above, the gas outlet port of the first gas channel 20 and the second gas channel 30 are each in communication with the gas chamber 51 of the pool body.

In some possible implementations, the present application further provides an inflation method for the massage pool air supply system of the above embodiments; the method includes: detecting that the gas pressure within the gas chamber 51 dose not reach a set value, controlling the first gas channel 20 to be in a first state of inflating the gas chamber 51 by a controller (not shown); detecting that the gas pressure in the gas chamber 51 reaches a set value, and controlling the first gas channel 20 to be in the second state of stopping inflation to the gas chamber 51 by the controller.

Specifically, after the gas pump (i.e. the gas supply apparatus 10) is turned on, the gas pump draws air from the bottom and discharges air from the top. The air passes through the three-way structural member 70 and is divided into two paths, one path directly leads to the third gas channel 80 to generate bubbles in the inflated object 50, and the other path enters the first gas channel 20 through the solenoid valve (i.e., the switching apparatus 60), and then enters the gas chamber 51 of the pool body (i.e., the inflated object 50). At the beginning, the electric valve core of the solenoid valve is in an on state, and air enters the pool body through the solenoid valve. When the gas pressure in the gas chamber 51 of the pool body reaches a set value, the gas pressure sensor 40 generates a signal to the controller, and the controller controls the action of the solenoid valve, so that the valve core of the solenoid valve is closed to cut off the gas source of the pool body, and inflation of the gas chamber 51 of the pool body is fulfilled.

To sum up, the pool body is inflated by the self-contained inflation system 1 of the equipment, which is convenient and quick, and is not limited by the use place.

While the present invention has been illustrated and described with reference to certain preferred embodiments of the invention, it will be understood by those of ordinary skill in the art that the foregoing is a further detailed description of the invention in connection with the particular embodiments and the particular practice of the invention cannot be construed to be limited to these descriptions only. The invention is defined in the independent claims.

## Claims

1. An inflation system (1), wherein the inflation system comprises:
a first gas channel (20) having a gas inlet port and a gas outlet port, wherein the gas inlet port is configured for connection to a gas supply apparatus (10), and the gas outlet port is configured for communication with a gas chamber (51) of an inflated object (50); the first gas channel (20) is able to be switched between a first state and a second state; wherein
a second gas channel (30) is arranged in parallel to the first gas channel (20), wherein the first gas channel (20) and the second gas channel (30) are structurally not in communication with each other except for being able to jointly communicate with the gas chamber (51) of the inflated object (50), wherein the second gas channel (30) is arranged on an outer wall of the first gas channel (20), the second gas channel (30) is used for communicating with the gas chamber (51), and a gas pressure sensor (40) is provided on the second gas channel (30);
in the first state, a gas pressure in the gas chamber (51) measured by the gas pressure sensor (40) does not reach a set value, and the first gas channel (20) is able to inflate the gas chamber (51); and
in the second state, the gas pressure in the gas chamber (51) measured by the gas pressure sensor (40) reaches the set value, and the first gas channel (20) is able to stop inflating the gas chamber (51).

2. The inflation system (1) of claim 1, **characterized in that** a switching apparatus (60) is provided on the first gas channel (20), in the first state, the switching apparatus (60) is in an on state; in the second state, the switching apparatus (60) is in an off state.

3. The inflation system (1) of claim 2, **characterized in that** the switching apparatus (60) is a solenoid valve.

4. The inflation system (1) of claim 1, **characterized in that**, in the first state, the gas supply apparatus (10) is in an operation state; in the second state, the gas supply apparatus (10) is in an out-of-operation state.

5. The inflation system (1) of claim 1, **characterized in that** a port of the second gas channel (30) in communication with the gas chamber (51) is on the same side of the first gas channel (20) as the gas outlet port, the first gas channel (20) and the second gas channel (30) are configured for communication with a same inflation interface of the gas chamber (51).

6. The inflation system (1) of claim 1, **characterized in that** the extension direction of the first gas channel (20) is parallel to the extension direction of the second gas channel (30), the pipe diameter of the second gas channel (30) is smaller than the pipe diameter of the first gas channel (20), and an end of the first gas channel (20) in the extension direction which is not in communication with the gas chamber is closed.

7. The inflation system (1) of claim 6, **characterized in that** the ratio of the pipe diameter of the second gas channel to the pipe diameter of the first gas channel is 1/20 to 1/2.

8. The inflation system (1) of claim 1, **characterized in that** an outer wall of the second gas channel (30) is provided with an extension channel (31) in communication with the second gas channel (30), and the gas pressure sensor (40) is arranged on the extension channel (31).

9. The inflation system (1) of claim 1, **characterized in that** the first gas channel (20) and the second gas channel (30) are respectively configured for communication with inflation interfaces at different positions of the gas chamber (51).

10. The inflation system (1) of claim 1, **characterized in that** the first gas channel (20) is also provided with a one-way valve (22) inside, and in the first state, the one-way valve (22) is in an on state; in the second state, the one-way valve (22) is in an off state.

11. The inflation system (1) of claim 1, **characterized in that** the system further comprises a third gas channel (80), which is provided with a gas inlet port and a gas outlet port, the gas inlet port of the third gas channel is connected with the gas supply apparatus (10), and the gas outlet port of the third gas channel is used for being connected with a bubble spraying interface of the inflated object (50).

12. The inflation system (1) of claim 11, **characterized in that** the first gas channel (20) and the third gas channel (80) are connected with the gas supply apparatus (10) through a three-way structural member (70).

13. A massage pool air supply system, **characterized by** comprising:
a gas supply apparatus (10);
a pool body (50), which is provided with a gas chamber (51); and
the inflation system of any one of claims 1 to 12, wherein the gas inlet port of the first gas channel (20) is connected with the gas supply apparatus (10), and the gas outlet port of the first gas channel (20) and the second gas channel (30) communicate with the gas chamber (51), respectively.

14. An inflation method, **characterized in that** the inflation method is used for the massage pool air supply system of claim 13 and comprises:
detecting that the gas pressure in the gas chamber (51) does not reach a set value, and controlling the first gas channel (20) to be in a first state of inflating the gas chamber (51); and
detecting that the gas pressure in the gas chamber (51) reaches the set value, and controlling the first gas channel (20) to be in a second state of stopping the inflation of the gas chamber (51).

## Patentansprüche

1. Aufpumpsystem (1), wobei das Aufpumpsystem Folgendes umfasst:
einen ersten Gaskanal (20), der einen Gaseinlassanschluss und einen Gasauslassanschluss aufweist, wobei der Gaseinlassanschluss zur Verbindung mit einer Gaszufuhrvorrichtung (10) konfiguriert ist und der Gasauslassanschluss zur Kommunikation mit einer Gaskammer (51) eines aufpumpbaren Objektes (50) konfiguriert ist; wobei der erste Gaskanal (20) in der Lage ist, zwischen einem ersten Zustand und einem zweiten Zustand geschaltet zu werden; wobei
ein zweiter Gaskanal (30) parallel zu dem ersten Gaskanal (20) angeordnet ist, wobei der erste Gaskanal (20) und der zweite Gaskanal (30) strukturell nicht miteinander in Kommunikation stehen, mit der Ausnahme, dass sie in der Lage sind, gemeinsam mit der Gaskammer (51) des aufpumpbaren Objektes (50) zu kommunizieren, wobei der zweite Gaskanal (30) an einer Außenwand des ersten Gaskanals (20) angeordnet ist, wobei der zweite Gaskanal (30) zur Kommunikation mit der Gaskammer (51) verwendet wird und ein Gasdrucksensor (40) an dem zweiten Gaskanal (30) bereitgestellt ist;
in dem ersten Zustand ein Gasdruck in der Gaskammer (51), der durch den Gasdrucksensor (40) gemessen wird, einen festgelegten Wert nicht erreicht und der erste Gaskanal (20) in der Lage ist, die Gaskammer (51) aufzupumpen; und
in dem zweiten Zustand der Gasdruck in der Gaskammer (51), der durch den Gasdrucksensor (40) gemessen wird, den festgelegten Wert erreicht und der erste Gaskanal (20) in der Lage ist, das Aufpumpen der Gaskammer (51) zu stoppen.

2. Aufpumpsystem (1) nach Anspruch 1, **dadurch gekennzeichnet, dass** eine Schaltvorrichtung (60) an dem ersten Gaskanal (20) bereitgestellt ist, wobei sich die Schaltvorrichtung (60) in dem ersten Zustand in einem Ein-Zustand befindet; wobei sich die Schaltvorrichtung (60) in dem zweiten Zustand in einem Aus-Zustand befindet.

3. Aufpumpsystem (1) nach Anspruch 2, **dadurch gekennzeichnet, dass** die Schaltvorrichtung (60) ein Magnetventil ist.

4. Aufpumpsystem (1) nach Anspruch 1, **dadurch gekennzeichnet, dass** sich die Gaszufuhrvorrichtung (10) in dem ersten Zustand in einem Betriebszustand befindet; wobei sich die Gaszufuhrvorrichtung (10) in dem zweiten Zustand in einem Außerbetriebszustand befindet.

5. Aufpumpsystem (1) nach Anspruch 1, **dadurch gekennzeichnet, dass** sich ein Anschluss des zweiten Gaskanals (30) in Kommunikation mit der Gaskammer (51) auf derselben Seite des ersten Gaskanals (20) befindet wie der Gasauslassanschluss, wobei der erste Gaskanal (20) und der zweite Gaskanal (30) zur Kommunikation mit einer selben Aufpumpfläche der Gaskammer (51) konfiguriert sind.

6. Aufpumpsystem (1) nach Anspruch 1, **dadurch gekennzeichnet, dass** die Erstreckungsrichtung des ersten Gaskanals (20) parallel zu der Erstreckungsrichtung des zweiten Gaskanals (30) verläuft, wobei der Rohrdurchmesser des zweiten Gaskanals (30) kleiner ist als der Rohrdurchmesser des ersten Gaskanals (20) und ein Ende des ersten Gaskanals (20) in der Verlängerungsrichtung, das nicht in Kommunikation mit der Gaskammer steht, geschlossen ist.

7. Aufpumpsystem (1) nach Anspruch 6, **dadurch gekennzeichnet, dass** das Verhältnis des Rohrdurchmessers des zweiten Gaskanals zu dem Rohrdurchmesser des ersten Gaskanals 1/20 bis 1/2 beträgt.

8. Aufpumpsystem (1) nach Anspruch 1, **dadurch gekennzeichnet, dass** eine Außenwand des zweiten Gaskanals (30) mit einem Erweiterungskanal (31) in Kommunikation mit dem zweiten Gaskanal (30) versehen ist und der Gasdrucksensor (40) an dem Erweiterungskanal (31) angeordnet ist.

9. Aufpumpsystem (1) nach Anspruch 1, **dadurch gekennzeichnet, dass** der erste Gaskanal (20) und der zweite Gaskanal (30) jeweils zur Kommunikation mit Aufpumpflächen an unterschiedlichen Positionen der Gaskammer (51) konfiguriert sind.

10. Aufpumpsystem (1) nach Anspruch 1, **dadurch gekennzeichnet, dass** der erste Gaskanal (20) zudem mit einem Einwegventil (22) im Inneren versehen ist und sich das Einwegventil (22) in dem ersten Zustand in einem Ein-Zustand befindet, wobei sich das Einwegventil (22) in dem zweiten Zustand in einem Aus-Zustand befindet.

11. Aufpumpsystem (1) nach Anspruch 1, **dadurch gekennzeichnet, dass** das System ferner einen dritten Gaskanal (80) umfasst, der mit einem Gaseinlassanschluss und einem Gasauslassanschluss versehen ist, wobei der Gaseinlassanschluss des dritten Gaskanals mit der Gaszufuhrvorrichtung (10) verbunden ist und der Gasauslassanschluss des dritten Gaskanals verwendet wird, um mit einer Blasensprühschnittstelle des aufpumpbaren Objektes (50) verbunden zu sein.

12. Aufpumpsystem (1) nach Anspruch 11, **dadurch gekennzeichnet, dass** der erste Gaskanal (20) und der dritte Gaskanal (80) mit der Gaszufuhrvorrichtung (10) über ein Dreiwege-Strukturelement (70) verbunden sind.

13. Massagepoolluftzufuhrsystem, das **dadurch gekennzeichnet ist, dass** es Folgendes umfasst:
eine Gaszufuhrvorrichtung (10);
einen Poolkörper (50), der mit einer Gaskammer (51) versehen ist; und
das Aufpumpsystem nach einem der Ansprüche 1 bis 12, wobei der Gaseinlassanschluss des ersten Gaskanals (20) mit der Gaszufuhrvorrichtung (10) verbunden ist und der Gasauslassanschluss des ersten Gaskanals (20) bzw. des zweiten Gaskanals (30) mit der Gaskammer (51) kommunizieren.

14. Aufpumpverfahren, **dadurch gekennzeichnet, dass** das Aufpumpverfahren für das Massagepoolluftzufuhrsystem nach Anspruch 13 verwendet wird und Folgendes umfasst:
Detektieren, dass der Gasdruck in der Gaskammer (51) einen festgelegten Wert nicht erreicht, und Steuern des ersten Gaskanals (20), sich in einem ersten Zustand zum Aufpumpen der Gaskammer (51) zu befinden; und
Detektieren, dass der Gasdruck in der Gaskammer (51) den festgelegten Wert erreicht, und Steuern des ersten Gaskanals (20), sich in einem zweiten Zustand zum Stoppen des Aufpumpens der Gaskammer (51) zu befinden.

## Revendications

1. Système de gonflage (1), dans lequel le système de gonflage comprend :
un premier canal de gaz (20) présentant un orifice d'entrée de gaz et un orifice de sortie de gaz, dans lequel l'orifice d'entrée de gaz est configuré pour être relié à un appareil d'alimentation en gaz (10), et l'orifice de sortie de gaz est configuré pour communiquer avec une chambre de gaz (51) d'un objet gonflé (50) ; le premier canal de gaz (20) pouvant être commuté entre un premier état et un second état ; dans lequel
un deuxième canal de gaz (30) est agencé parallèlement au premier canal de gaz (20), dans lequel le premier canal de gaz (20) et le deuxième canal de gaz (30) ne sont structurellement pas en communication l'un avec l'autre, à l'exception du fait de pouvoir communiquer conjointement avec la chambre de gaz (51) de l'objet gonflé (50), dans lequel le deuxième canal de gaz (30) est agencé sur une paroi externe du premier canal de gaz (20), le deuxième canal de gaz (30) est utilisé pour communiquer avec la chambre de gaz (51), et un capteur de pression de gaz (40) est prévu sur le deuxième canal de gaz (30) ;
dans le premier état, une pression de gaz dans la chambre de gaz (51) mesurée par le capteur de pression de gaz (40) n'atteint pas une valeur de consigne, et le premier canal de gaz (20) est capable de gonfler la chambre de gaz (51) ; et
dans le second état, la pression de gaz dans la chambre de gaz (51) mesurée par le capteur de pression de gaz (40) atteint la valeur de consigne, et le premier canal de gaz (20) est capable d'arrêter le gonflage de la chambre de gaz (51).

2. Système de gonflage (1) selon la revendication 1, **caractérisé en ce qu'**un appareil de commutation (60) soit prévu sur le premier canal de gaz (20), **en ce que** dans le premier état, l'appareil de commutation (60) soit dans un état activé ;
et **en ce que** dans le second état, l'appareil de commutation (60) soit dans un état désactivé.

3. Système de gonflage (1) selon la revendication 2, **caractérisé en ce que** l'appareil de commutation (60) soit une électrovanne.

4. Système de gonflage (1) selon la revendication 1, **caractérisé en ce que**, dans le premier état, l'appareil d'alimentation en gaz (10) soit dans un état de fonctionnement ; et **en ce que**, dans le second état, l'appareil d'alimentation en gaz (10) soit dans un état de non-fonctionnement.

5. Système de gonflage (1) selon la revendication 1, **caractérisé en ce qu'**un orifice du deuxième canal de gaz (30) en communication avec la chambre de gaz (51) soit du même côté du premier canal de gaz (20) que l'orifice de sortie de gaz, le premier canal de gaz (20) et le deuxième canal de gaz (30) étant configurés pour communiquer avec une même interface de gonflage de la chambre de gaz (51).

6. Système de gonflage (1) selon la revendication 1, **caractérisé en ce que** la direction d'extension du premier canal de gaz (20) soit parallèle à la direction d'extension du deuxième canal de gaz (30), **en ce que** le diamètre du tuyau du deuxième canal de gaz (30) soit inférieur au diamètre du tuyau du premier canal de gaz (20), et **en ce qu'**une extrémité du premier canal de gaz (20) dans la direction d'extension qui n'est pas en communication avec la chambre de gaz soit fermée.

7. Système de gonflage (1) selon la revendication 6, **caractérisé en ce que** le rapport entre le diamètre du tuyau du deuxième canal de gaz et le diamètre du tuyau du premier canal de gaz soit de 1/20 à 1/2.

8. Système de gonflage (1) selon la revendication 1, **caractérisé en ce qu'**une paroi externe du deuxième canal de gaz (30) soit pourvue d'un canal d'extension (31) en communication avec le deuxième canal de gaz (30), et **en ce que** le capteur de pression de gaz (40) soit agencé sur le canal d'extension (31).

9. Système de gonflage (1) selon la revendication 1, **caractérisé en ce que** le premier canal de gaz (20) et le deuxième canal de gaz (30) soient respectivement configurés pour communiquer avec des interfaces de gonflage à des positions différentes de la chambre de gaz (51).

10. Système de gonflage (1) selon la revendication 1, **caractérisé en ce que** le premier canal de gaz (20) soit également pourvu d'un clapet anti-retour (22) à l'intérieur, **en ce que** dans le premier état, le clapet anti-retour (22) soit dans un état ouvert ; et **en ce que** dans le second état, le clapet anti-retour (22) soit dans un état fermé.

11. Système de gonflage (1) selon la revendication 1, **caractérisé en ce que** le système comprenne en outre un troisième canal de gaz (80), qui est pourvu d'un orifice d'entrée de gaz et d'un orifice de sortie de gaz, l'orifice d'entrée de gaz du troisième canal de gaz étant relié à l'appareil d'alimentation en gaz (10), et l'orifice de sortie de gaz du troisième canal de gaz étant destiné à être relié à une interface de diffusion de bulles de l'objet gonflé (50).

12. Système de gonflage (1) selon la revendication 11, **caractérisé en ce que** le premier canal de gaz (20) et le troisième canal de gaz (80) soient reliés à l'appareil d'alimentation en gaz (10) par l'intermédiaire d'un élément structurel à trois voies (70).

13. Système d'alimentation en air de piscine de massage, **caractérisé en ce qu'**il comprenne :
un appareil d'alimentation en gaz (10) ;
un corps de piscine (50), qui est pourvu d'une chambre de gaz (51) ; et
le système de gonflage selon l'une quelconque des revendications 1 à 12, dans lequel l'orifice d'entrée de gaz du premier canal de gaz (20) est relié à l'appareil d'alimentation en gaz (10), et l'orifice de sortie de gaz du premier canal de gaz (20) et le deuxième canal de gaz (30) communiquent chacun avec la chambre de gaz (51).

14. Procédé de gonflage, **caractérisé en ce que** le procédé de gonflage soit utilisé pour le système d'alimentation en air de piscine de massage de la revendication 13 et comprenne :
la détection du fait que la pression de gaz dans la chambre de gaz (51) n'atteint pas une valeur de consigne, et la commande du premier canal de gaz (20) pour qu'il se trouve dans un premier état de gonflage de la chambre de gaz (51) ; et
la détection du fait que la pression de gaz dans la chambre de gaz (51) atteint la valeur de consigne, et la commande du premier canal de gaz (20) pour qu'il se trouve dans un second état d'arrêt du gonflage de la chambre de gaz (51).
